# DEMANDE DE BREVET EUROPEEN

(11) **EP 1 247 681 A2**
(43) Date de publication de la demande: **09.10.2002**
(21) Numéro de dépôt: 02290845.3
(22) Date de dépôt: 05.04.2002
(51) Int. Cl.: B60K 11/04

(54) **Dispositif de fixation d'un èchangeur de chaleur de véhicule automobile**

(30) Priorité: 06.04.2001 FR 0104696
(71) Demandeur: Renault s.a.s., 92100 Boulogne Billancourt (FR)
(72) Inventeur: Dabrowski, Laurent, 78000 Versalles (FR)

(57) **Abrégé**

Dispositif de fixation monté sur une première pièce (11) et comportant des moyens de réception (12,41,42) d'un élément de localisation (13) d'une seconde pièce (10), selon une première position par rapport à la première pièce (11) correspondant à des conditions normales de fonctionnement du dispositif. Le dispositif comporte, en outre, des moyens de réception (12,41,42) de l'élément de localisation (13) selon une deuxième position, située en aval de la première position selon une première direction privilégiée (X), l'élément de localisation (13) pouvant quitter la première position pour venir occuper la seconde position lorsqu'il est soumis à un effort, selon la première direction privilégiée (X), d'amplitude dépassant un seuil déterminé.

## Description

La présente invention concerne une fixation pour un échangeur, notamment un radiateur, de véhicule automobile.

Le radiateur de véhicule automobile est généralement situé dans le compartiment avant du véhicule, et monté sur des traverses par l'intermédiaire de moyens de fixation, au moins en partie élastiques, qui réduisent la transmission de vibrations. Le radiateur peut, par exemple, reposer sur une traverse inférieure par l'intermédiaire de deux fixations et être relié à une traverse supérieure par deux autres fixations.

Une volonté actuelle des constructeurs automobiles est de diminuer le plus possible le coût des réparations dans le cas de chocs avant de faibles amplitudes. Pour ce faire, on cherche à éviter le plus possible toutes détériorations de composants, notamment le radiateur, devant entraîner leur remplacement.

Une possibilité consiste à utiliser des moyens de fixation, par exemple des clips, qui permettent de désolidariser le radiateur des traverses inférieure et supérieure lorsqu'un effort d'amplitude suffisante est appliqué sur le module, ce qui peut être le cas lors d'un choc avant. Cet effort suffisant est déterminé pour être d'amplitude inférieure à l'effort qu'il faudrait pour endommager le radiateur. Néanmoins, le radiateur, une fois libéré, peut se déplacer sur des courses importantes et venir impacter avec les éléments du compartiment avant situé derrière lui et être ainsi abîmé.

La présente invention vise à obtenir des fixations permettant un déplacement relatif de course limitée d'un échangeur, notamment le radiateur, par rapport aux traverses le supportant. De plus, la présente invention concerne plus particulièrement les fixations reliant le radiateur à une traverse supérieure, ces fixations devant remplir des fonctions supplémentaires telles que permettre le réglage de la position de l'échangeur par rapport à la traverse supérieure selon au moins une première direction privilégiée, et permettre une liberté de déplacement du radiateur par rapport à la traverse selon une seconde direction privilégiée.

Dans ce but, elle propose un dispositif de fixation monté sur une première pièce et comportant des moyens de réception d'un élément de localisation d'une seconde pièce, selon une première position par rapport à la première pièce correspondant à des conditions normales de fonctionnement du dispositif, caractérisé en ce qu'il comporte, en outre, des moyens de réception de l'élément de localisation selon une deuxième position, située en aval de la première position selon une première direction privilégiée, l'élément de localisation pouvant quitter la première position pour venir occuper la seconde position lorsqu'il est soumis à un effort, selon la première direction privilégiée, d'amplitude dépassant un seuil déterminé.

Selon une autre caractéristique de l'invention, les moyens de réception comportent un premier logement recevant l'élément de localisation selon la première position, et un second logement, relié au premier logement par un passage, et situé en aval du premier logement selon la première direction privilégiée, l'élément complémentaire pouvant quitter le premier logement pour venir occuper le second logement en traversant le passage lorsqu'il est soumis à l'effort, selon la première direction privilégiée, d'amplitude dépassant le seuil déterminé.

Selon une autre caractéristique de l'invention, les premier et deuxième logements sont des alésages, et l'élément complémentaire est un pion.

Selon une autre caractéristique de l'invention, le passage est un évidement reliant les deux alésages, et dont la section droite, selon la première direction privilégiée, est de dimensions, au moins en partie, inférieures à celles du pion.

Selon une autre caractéristique de l'invention, le pion vient déformer l'évidement lorsqu'il est soumis à l'effort, selon la direction privilégiée, d'amplitude dépassant le seuil déterminé.

Selon une autre caractéristique de l'invention, les moyens de réception comportent un cadre délimitant un espace intérieur, en partie occupé par un élément déformable comportant un logement recevant l'élément de localisation, l'élément déformable occupant une première portion de l'espace intérieur pour laquelle l'élément de localisation se trouve dans la première position, ledit élément déformable pouvant se déformer lorsqu'il est soumis, par l'intermédiaire de l'élément de localisation, à l'effort, selon la direction privilégiée, d'amplitude dépassant le seuil déterminé, pour se déplacer dans l'espace intérieur pour venir occuper une seconde portion de celui-ci pour laquelle l'élément de localisation se trouve dans la deuxième position.

Selon une autre caractéristique de l'invention, le cadre comprend au moins une butée se projetant en saillie dans l'élément déformable afin de s'opposer au déplacement de l'élément déformable dans l'espace intérieur.

Selon une autre caractéristique de l'invention, le dispositif comporte des moyens autorisant un débattement relatif de la seconde pièce par rapport à la première pièce selon une deuxième direction privilégiée, au moins lorsque l'élément de localisation se trouve dans la première position.

Selon une autre caractéristique de l'invention, les moyens de réception comprennent un plot comportant au moins un alésage recevant un pion de la deuxième pièce, et une patte reliée à la première pièce et qui comporte une entretoise présentant deux parois en vis-à-vis, venant en appui chacune contre une surface du plot, et bloquant le plot en translation selon la première direction privilégiée, tout en laissant le plot libre en translation selon la deuxième direction privilégiée.

Selon une autre caractéristique de l'invention, l'élément de réception comporte un trou oblong recevant un pion cylindrique de la deuxième pièce, le trou oblong s'étendant selon la deuxième direction privilégiée.

Selon une autre caractéristique de l'invention, le dispositif comporte des moyens de réglages, selon une troisième direction privilégiée, de la localisation de la première position à laquelle est fixée la deuxième pièce par rapport à la première pièce.

Selon une autre caractéristique de l'invention, les moyens de réglages comprennent un élément de réglage coulissant dans un logement de la première pièce.

Selon une autre caractéristique de l'invention, l'élément de réglage est maintenu en position par une paroi crantée coopérant avec une surface dudit logement.

D'autres caractéristiques et avantages de l'invention apparaîtront à la lecture de la description qui va suivre en référence aux dessins dans lesquels :
- la figure 1 représente un schéma simplifié d'une vue éclatée du dispositif de montage selon un premier mode réalisation d'un radiateur sur une traverse supérieure d'un compartiment avant d'un véhicule automobile,
- la figure 2 représente une vue en perspective de la patte de fixation selon le premier mode de réalisation,
- la figure 3 représente une vue de côté de la figure 2,

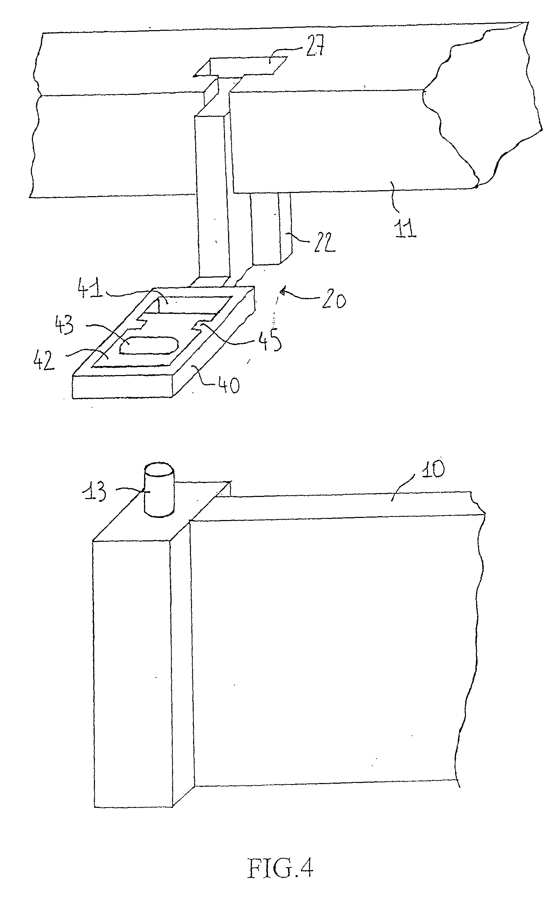

- la figure 4 représente une vue similaire à la figure 1 du dispositif de fixation selon un second mode de réalisation,

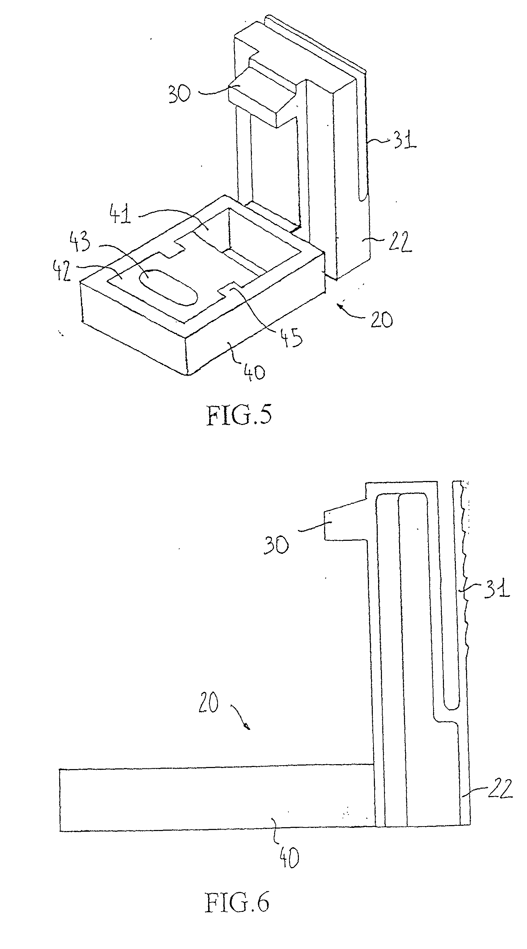

- la figure 5 représente une vue schématique en perspective de la patte de fixation selon le second mode de réalisation,
- la figure 6 représente une vue de côté de la figure 5,
- la figure 7 représente une vue en perspective d'une variante de l'invention du premier mode de réalisation.

Sur les différentes figures, l'axe X représente l'axe longitudinal naturel du véhicule automobile, orienté vers l'avant dudit véhicule, l'axe Y représente l'axe latéral naturel du véhicule orienté vers la gauche du véhicule, et l'axe Z représente un axe vertical orienté vers le haut du véhicule.

Sur les différentes figures, les éléments présentant des fonctions similaires possèdent des références identiques.

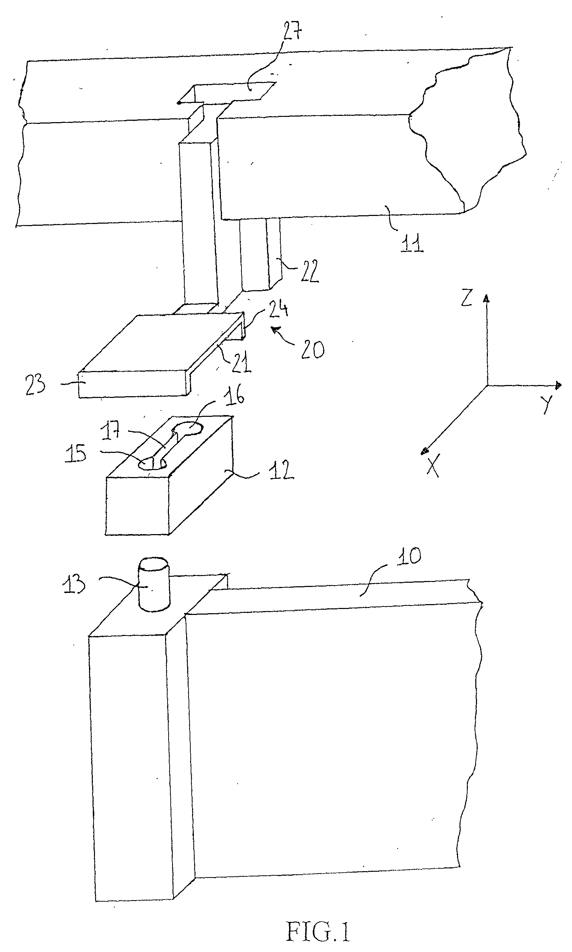

On peut voir, sur la figure 1, un premier mode de réalisation de l'invention. Une portion du radiateur 10 d'un véhicule automobile est représentée maintenue en position sur une traverse supérieure 11 du véhicule automobile, notamment une traverse supérieure du compartiment avant du véhicule, par l'intermédiaire de deux pions 13 (seul un pion 13 est représenté) solidaires du radiateur 10, et qui coopèrent chacun avec un plot de fixation 12 relié à la traverse 11 par une patte 20. Le radiateur 10 est également fixé à une autre traverse (non représentée) dans sa partie inférieure.

Le plot de fixation 12 se compose d'un élément monobloc en matériau élastique. Un premier alésage 15, d'axe sensiblement parallèle à Z, vient traverser le plot 12 de part en part. Ce premier alésage 15 est destiné à recevoir le pion 13 du radiateur 10 lors du montage du radiateur 10 sur la traverse supérieure 11. Un second alésage 16, d'axe parallèle à l'axe du premier alésage 15, traverse également le plot 12 de part en part. Il peut être toutefois en partie recouvert, au niveau de son extrémité débouchant sur la face du plot 12 opposée au radiateur 10, par un opercule (non représenté).

Les deux alésages 15,16 sont reliées par un évidement 17, de section rectangulaire, qui traverse également de part en part le plot 12. Des évidements secondaires (non représentés), traversant de part en part ou seulement partiellement le plot 12, peuvent être répartis sur l'ensemble du plot 12, de façon à en faciliter la déformation sous l'action de forces extérieures.

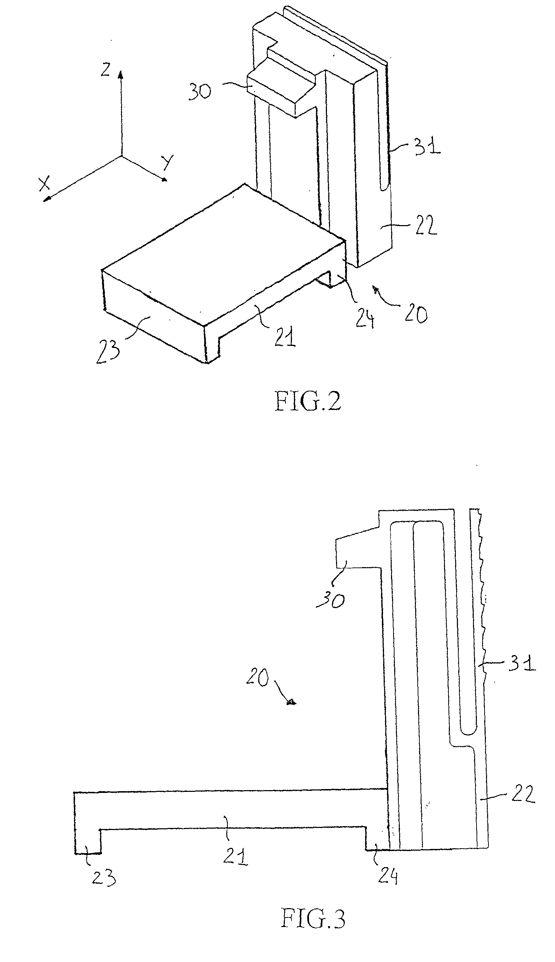

La patte 20, représentée seule sur les figures 2 et 3, se compose d'une entretoise 21, présentant deux parois d'appui 23,24 adaptées pour coopérer avec deux faces opposées 25,26 du plot 12. Les parois d'appui 23,34 empêchent tout mouvement du plot 12 selon la direction X, tout en laissant libre tout déplacement du plot 12 selon la direction Y.

L'entretoise 21 se prolonge par un élément de réglage 22 pouvant coulisser, selon la direction Z, dans un logement 27 réalisé sur la traverse supérieure 11. L'élément de réglage 22 comprend un doigt 30 de préhension afin de pouvoir être manipulé manuellement par un opérateur. Le maintien en position, selon la direction Z, est assuré par une paroi crantée 31 de l'élément de réglage coopérant avec une surface complémentaire du logement 27. Typiquement, la paroi crantée 31 autorise le coulissement de la patte 20 vers le bas et interdit son coulissement vers le haut.

On peut voir, sur la figure 3, un second mode de réalisation de l'invention. Dans ce second mode, le plot de fixation 12 et l'entretoise 21 du premier mode de réalisation sont remplacés par un cadre 40, solidaire de l'élément de réglage 22, qui délimite un espace intérieur 41 recevant un élément déformable 42. Celui-ci est constitué d'un matériau élastique et comporte un trou oblong 43 recevant le pion 13. Le trou oblong 43 est orienté selon la direction Y de façon à permettre un mouvement relatif du pion 13 par rapport à l'élément déformable 42, et par conséquent à la traverse supérieure 11, selon cette même direction. Le cadre 40 comporte deux butées 45 qui se projettent en saillie des parois du cadre 40 vers l'espace intérieur 41. L'élément déformable 42 n'occupe pas tout l'espace intérieur 41. En position normale de fonctionnement du véhicule, l'élément déformable 42 est situé le plus en amont possible, selon la direction X, dans l'espace intérieur 41. Les butées viennent pénétrer dans l'élément déformable 42 de façon à en empêcher les déplacements, selon la direction X, pour des conditions de fonctionnement normales du véhicule.

L'élément de réglage 22 de la patte 20 selon le second mode de réalisation de la présente invention est identique à celui du premier mode de réalisation.

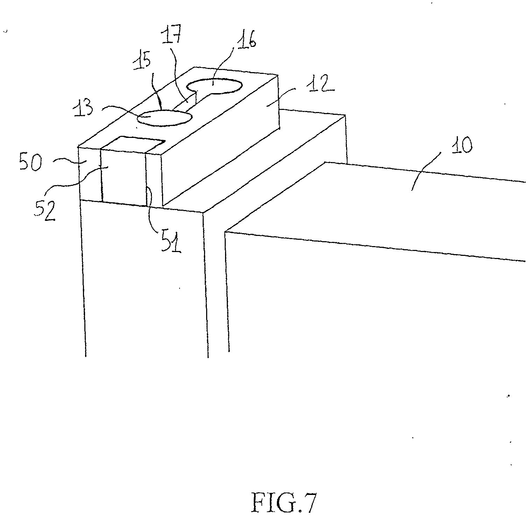

La figure 7 représente une variante du premier mode de réalisation de l'invention selon laquelle le plot 12 présente, selon la direction X, une extrémité avant 50 comportant un évidement 51 adapté pour recevoir un tenon 52 situé sur le radiateur 10. La présence du tenon 31 impose l'orientation du plot 12 lors de son montage et prévient tout assemblage incorrect.

Le montage du radiateur 10 sur la traverse supérieure 11 est réalisé de la façon suivante : pour le premier mode de réalisation de l'invention, les deux plots de fixation 12 sont placés au préalable sur les pions 13 du radiateur. Le radiateur 10 est par ailleurs mis en place sur une traverse inférieure (non représentée). Eventuellement, par exemple dans le cas de la variante, le plot 12 et/ou le radiateur 10 comportent des éléments 51 qui imposent une orientation spécifique pour le montage des plots 12. Les pions 13 sont insérés dans l'alésage 15 du plot 12 situé le plus en amont selon la direction X.

La patte 20 est préalablement montée sur la traverse supérieure 11. Elle est réglée en position selon la direction Z au moyen de l'élément de réglage 22, de façon à mettre en place l'entretoise 21 au niveau du plot 12 de façon à en prévenir les déplacements selon la direction X.

Pour le second mode de réalisation de l'invention, chaque patte 20 est placée sur la traverse supérieure 11, et le radiateur 10 est mis en place sur la traverse inférieure. La position de la patte 20 est alors réglée de façon à ce que chaque pion 13 soit inséré dans le trou oblong 43 de l'élément déformable 42 de la patte 20 correspondante.

En cas de choc avant, un effort peut venir s'appliquer sur le radiateur 10. Si cet effort est d'amplitude suffisante, et en particulier si l'effort résultant appliqué aux pions 13 selon la direction X est d'amplitude suffisante, chaque pion 13, dans le premier mode de réalisation, se déplace depuis le premier alésage principal 15, jusqu'au deuxième alésage principal 16, par le biais de l'évidement principal 17 qui se déforme lors du passage du pion 13, et, dans le cas du deuxième mode de réalisation, l'élément déformable 42 se déplace, avec le pion 13, dans l'espace intérieur 41, pour venir occuper la partie la plus en aval de celui-ci, par rapport à la direction X. Typiquement, la course ainsi réalisée par le pion 13, et qui correspond à l'entraxe entre les deux alésages principaux 15,16, est de l'ordre de 15 mm.

Globalement, le radiateur 10 recule d'une course égale à la course de chaque pion 13. Parvenu en fin de course, les pattes 20 retiennent le radiateur 10, qui, ainsi, ne vient pas en contact avec des éléments du compartiment moteur situés derrière lui, selon la direction X. L'effort à fournir pour faire déplaccr chaque pion dépcnd essentiellement, pour lc premier mode réalisation, de la rigidité du matériau constituant le plot 12 ainsi que la taille et la forme de l'évidement principal 17, et, pour le second mode de réalisation, de la rigidité du matériau constituant l'élément déformable 41 et de la forme des butées 45. L'amplitude de l'effort de passage est choisie de façon à ce que, lors du fonctionnement normal du véhicule, les pions 13 du radiateur 10 restent chacun dans le premier alésage 15 du plot 12 pour le premier mode de réalisation, et que l'élément déformable reste, dans l'espace intérieur 41, le plus en amont possible, selon la direction X.

La fixation selon l'invention présente de nombreux avantages. Elle permet, en cas de choc d'amplitude donnée, un recul de course limitée du radiateur par rapport aux traverses le supportant. Elle autorise une grande adaptation à des variations relativement importantes selon la direction Z, grâce à la patte pouvant coulisser par rapport à la traverse supérieure. Ces variations peuvent, par exemple, correspondre à une gamme de radiateurs de dimensions différentes montés sur un même type de véhicule, ou bien à un même type de radiateur monté sur une gamme de véhicules présentant des écarts variables entre les traverses supérieure et inférieure venant le supporter. Enfin, l'invention autorise une certaine marge de débattement selon la direction Y, cette marge pouvant correspondre aux jeux des différentes pièces en présence.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

1. Dispositif de fixation pour véhicule automobile monté sur une première pièce (11) et comportant des moyens de réception (12,41,42) d'un élément de localisation (13) d'une seconde pièce (10), selon une première position par rapport à la première pièce (11) correspondant à des conditions normales de fonctionnement du dispositif, **caractérisé en ce qu'**il comporte, en outre, des moyens de réception (12,41,42) de l'élément de localisation (13) selon une deuxième position, située en aval de la première position selon une première direction privilégiée (X), l'élément de localisation (13) pouvant quitter la première position pour venir occuper la seconde position lorsqu'il est soumis à un effort, selon la première direction privilégiée (X), d'amplitude dépassant un seuil déterminé.

2. Dispositif de fixation selon la revendication 1, **caractérisé en ce que** les moyens de réception (12) comportent un premier logement (15) recevant l'élément de localisation (13) selon la première position, et un second logement (16), relié au premier logement (15) par un passage (17), et situé en aval du premier logement (15) selon la première direction privilégiée (X), l'élément complémentaire (13) pouvant quitter le premier logement (15) pour venir occuper le second logement (16) en traversant le passage (17) lorsqu'il est soumis à l'effort, selon la première direction privilégiée (X), d'amplitude dépassant le seuil déterminé.

3. Dispositif de fixation selon la revendication 2, **caractérisé en ce que** les premier (15) et deuxième (16) logements sont des alésages, et l'élément complémentaire (13) est un pion.

4. Dispositif de fixation selon la revendication 3, **caractérisé en ce que** le passage (17) est un évidemment reliant les deux alésages (15,16), et dont la section droite, selon la première direction privilégiée (X), est de dimensions, au moins en partie, inférieures à celles du pion (13).

5. Dispositif de fixation selon la revendication 4, **caractérisé en ce que** le pion (13) vient déformer l'évidement (17) lorsqu'il est soumis à l'effort, selon la première direction privilégiée (X), d'amplitude dépassant le seuil déterminé.

6. Dispositif de fixation selon la revendication 1, **caractérisé en ce que** les moyens de réception (41,42) comportent un cadre (40) délimitant un espace intérieur (41), en partie occupé par un élément déformable (42) comportant un logement (43) recevant l'élément de localisation (13), l'élément déformable (42) occupant une première portion de l'espace intérieur (41) pour laquelle l'élément de localisation (13) se trouve dans la première position, ledit élément déformable (42) pouvant se déformer lorsqu'il est soumis, par l'intermédiaire de l'élément de localisation (13), à l'effort, selon la première direction privilégiée (X), d'amplitude dépassant le seuil déterminé, pour se déplacer dans l'espace intérieur (41) pour venir occuper une seconde portion de celui-ci pour laquelle l'élément de localisation (13) se trouve dans la deuxième position.

7. Dispositif de fixation selon la revendication 6, **caractérisé en ce que** le cadre (40) comprend au moins une butée (45) se projetant en saillie dans l'élément déformable (42) afin de s'opposer au déplacement de l'élément déformable (42) dans l'espace intérieur (41).

8. Dispositif de fixation selon l'une des revendications 1 à 7, **caractérisé en ce qu'**il comporte des moyens (21,12,42) autorisant un débattement relatif de la seconde pièce (10) par rapport à la première pièce (11) selon une deuxième direction privilégiée (Y), au moins lorsque l'élément de localisation (13) se trouve dans la première position.

9. Dispositif de fixation selon la revendication 8, **caractérisé en ce que** les moyens de réception (21,12) comprennent un plot (12) comportant au moins un alésage (15) recevant un pion (13) de la deuxième pièce (10), et une patte (20) reliée à la première pièce (10) comportant une entretoise (21) présentant deux parois (23,24) en vis-à-vis, venant en appui chacune contre une surface du plot (12), et bloquant le plot (12) en translation selon la première direction privilégiée (X), tout en laissant le plot (12) libre en translation selon la deuxième direction privilégiée (Y).

10. Dispositif de fixation selon la revendication 9, **caractérisé en ce que** l'élément de réception (42) comporte un trou oblong (43) recevant un pion (13) cylindrique de la deuxième pièce (10), le trou oblong (43) s'étendant selon la deuxième direction privilégiée (Y).

11. Dispositif de fixation selon l'une des revendications 1 à 10, **caractérisé en ce qu'**il comporte des moyens de réglages (22), selon une troisième direction privilégiée (Z), de la localisation de la première position à laquelle est fixée l'élément de localisation (13) de la deuxième pièce (10) par rapport à la première pièce (11).

12. Dispositif de fixation selon la revendication 11, **caractérisé en ce que** les moyens de réglages (22) comprennent un élément de réglage coulissant dans un logement (27) de la première pièce (11).

13. Dispositif de fixation selon la revendication 12, **caractérisé en ce que** l'élément de réglage (22) est maintenue en position par une paroi crantée (31) coopérant avec une surface dudit logement (27).
